# DEMANDE DE BREVET EUROPEEN

(11) **EP 1 762 439 A1**
(43) Date de publication de la demande: **14.03.2007**
(21) Numéro de dépôt: 06300796.7
(22) Date de dépôt: 12.07.2006
(51) Int. Cl.: B60R 19/34

(54) **Poutre de pare-chocs de véhicule automobile**

(30) Priorité: 13.09.2005 FR 0552753
(71) Demandeur: Peugeot Citroën Automobiles S.A., 78140 Vélizy Villacoublay (FR)
(72) Inventeur: Masfrand, Stéphane, 78160 Marly-Le-Roi (FR); Lair, Renaud, 92260 Fontenay Aux Roses (FR)

(57) **Abrégé**

L'invention concerne une poutre (1) de pare-chocs pour véhicule automobile muni notamment d'une structure (5), ladite poutre (1) comportant au moins un élément de transfert (2) des efforts d'un choc à la structure (5), au moins un élément d'absorption (3) de l'énergie obtenue lors d'un choc, l'élément d'absorption étant interposé entre la structure (5) du véhicule et l'élément de transfert (2), l'élément de transfert (2) s'étendant de manière transversale au véhicule et l'élément d'absorption (3) s'étendant de manière sensiblement perpendiculaire audit élément de transfert (2).

L'invention se caractérise en ce que l'élément d'absorption (3) se trouve partiellement à l'intérieur d'une zone interne (20) de l'élément de transfert (2) de sorte qu'en cas de choc, une partie extérieure (3e) de l'élément d'absorption vienne se loger dans ladite zone interne (20) de l'élément de transfert, et plus particulièrement en ce que l'ouverture (7) est ménagée sur des cloisons avant et arrière (2a, 2d) de la traverse (2).

## Description

L'invention se rapporte à une poutre de pare-chocs pour véhicule automobile.

L'invention concerne plus particulièrement une poutre de pare-chocs destinée à être implantée à l'arrière et/ou à l'avant d'un véhicule automobile.

Le comportement d'un véhicule automobile doit satisfaire à certaines contraintes lors de chocs « grande vitesse », réparabilité « moyenne vitesse » et parking « petite vitesse ». Pour cela, il est connu de disposer notamment en partie avant et/ou arrière du véhicule des poutres de pare-chocs dont la fonction principale vise à dissiper ou absorber, l'énergie du choc.

Il est connu des poutres de pare-chocs comportant une traverse, des absorbeurs au nombre habituel de deux, et une platine assurant l'interface entre la structure du véhicule et les absorbeurs. La traverse est destinée à répartir les efforts provenant d'un choc à « grande vitesse » sur la caisse du véhicule. Ainsi, en cas de choc à grande vitesse, la traverse répartit l'effort engendré par le choc à la structure du véhicule. Les absorbeurs sont, quant à eux, habituellement destinés, comme leur nom l'indique, à absorber tout ou partie de l'énergie cinétique lié au choc réparabilité à « moyenne vitesse », par déformation. A la différence de la traverse, l'absorbeur possède un rendement d'absorption d'énergie important. Néanmoins, pour que ce dernier puisse assurer pleinement le rôle qui lui est dévolu lors d'un choc « moyenne vitesse », le porte à faux avant du véhicule est fortement impacté par la dimension longitudinale des absorbeurs. En effet, les absorbeurs doivent être aptes à se déformer de sorte à absorber l'énergie cinétique provonant d'un choc à « moyenne vitesse », c'est-à-dire d'un choc provoqué par le déplacement du véhicule sur un obstacle dont la différence de vitesse se situe aux alentours de 16 kilomètres par heure.

Le choc réparabilité nécessite par voie de conséquence la présence d'absorbeurs de grande dimension. En effet, la quantité d'énergie absorbée est directement liée à la longueur des absorbeurs. Compte tenu des poids élevés des véhicules, les absorbeurs ont donc un encombrement de plus en plus contraignant.

La demanderesse a ainsi relevé qu'un porte à faux important est, d'un point de vue du style, du moins acceptable pour les véhicules de grandes dimensions, inconcevable pour les véhicules citadins. En effet, l'augmentation du poids des véhicules citadins nécessite le recours à des absorbeurs dont la longueur pénalise lourdement le style extérieur du véhicule.

Un but de la présente invention est de pallier tout ou partie des inconvénients de l'art antérieur relevés ci-dessus.

La présente invention a trait à une poutre de pare-chocs pour véhicule automobile muni notamment d'une structure, ladite poutre comportant au moins un élément de transfert des efforts à la structure, au moins un élément d'absorption de l'énergie obtenue lors d'un choc, l'élément d'absorption étant interposé entre la structure du véhicule et l'élément de transfert, l'élément de transfert s'étendant de manière transversale au véhicule et l'élément d'absorption s'étendant de manière sensiblement perpendiculaire audit élément de transfert.

A cette fin, la poutre selon l'invention, par ailleurs conforme à la définition générique qu'en donne le préambule ci-dessus, est essentiellement caractérisée en ce que l'élément d'absorption se trouve partiellement à l'intérieur d'une zone interne de l'élément de transfert de sorte qu'en cas de choc, une partie extérieure de l'élément d'absorption vienne se loger dans la zone interne de l'élément de transfert.

Par ailleurs, la poutre de l'invention peut comporter l'une ou plusieurs des caractéristiques suivantes prises séparément ou en combinaison l'une avec l'autre :
- l'élément de transfert comprend au moins une cloison s'étendant de manière sensiblement verticale, et en ce que l'ouverture est ménagée sur ladite cloison,
- l'ouverture est ménagée soit sur des cloisons avant et arrière, soit sur la cloison arrière,
- chaque élément d'absorption s'étend au travers de chaque ouverture ménagée sur la cloison arrière, et en ce que chaque élément d'absorption comprend une face avant disposée contre une face intérieure de la cloison avant de l'élément de transfert,
- chaque élément d'absorption comprend une face avant disposée à l'aplomb d'une face extérieure de la cloison avant de l'élément de transfert,
- chaque élément d'absorption comprend une cloison avant faisant saillie hors d'une face extérieure de la cloison avant de l'élément de transfert,
- l'élément de transfert est rendu solidaire à l'élément d'absorption par l'intermédiaire d'au moins une ligne de soudure s'étendant le long de tout ou partie d'au moins une ligne de jonction entre l'élément de transfert et l'élément d'absorption,
- ladite ligne de soudure est disposée sur une face extérieure de la cloison avant.

D'autres particularités et avantages apparaîtront à la lecture de la description ci-après faite en référence aux figures dans lesquelles :
- la figure 1 est une vue en perspective partielle d'une poutre de pare-chocs de véhicule automobile, selon l'invention, ladite poutre étant agencée à l'avant ou à l'arrière d'une structure du véhicule, et représentée dans son état avant un choc,
- la figure 2 est une vue en coupe longitudinale selon A-A de la figure 1, détaillant l'agencement des différents éléments de la poutre,
- la figure 3 est une vue en coupe longitudinale d'un autre mode de réalisation de la poutre selon l'invention, ladite poutre étant représentée dans son état avant un choc,
- la figure 4 est une vue en coupe longitudinale de la poutre des figures 1 et 2, ladite poutre étant représentée dans un état déformé après un choc.

Les poutres de pare-chocs de véhicule automobile comprennent au moins un élément de transfert d'effort et au moins un élément d'absorption d'énergie.

L'élément de transfert d'effort est utilisé lors d'un choc à « grande vitesse » afin de transmettre l'énergie du choc à la structure du véhicule. L'élément d'absorption est quant à lui utilisé lors d'un choc à « moyenne vitesse » afin d'absorber par déformation plastique l'énergie cinétique générée par le choc.

Dans ce qui suit, les orientations utilisées sont les orientations habituelles d'un véhicule automobile et les termes «avant », « arrière » s'entendent par rapport à la position d'un conducteur et du sens de marche normal du véhicule.

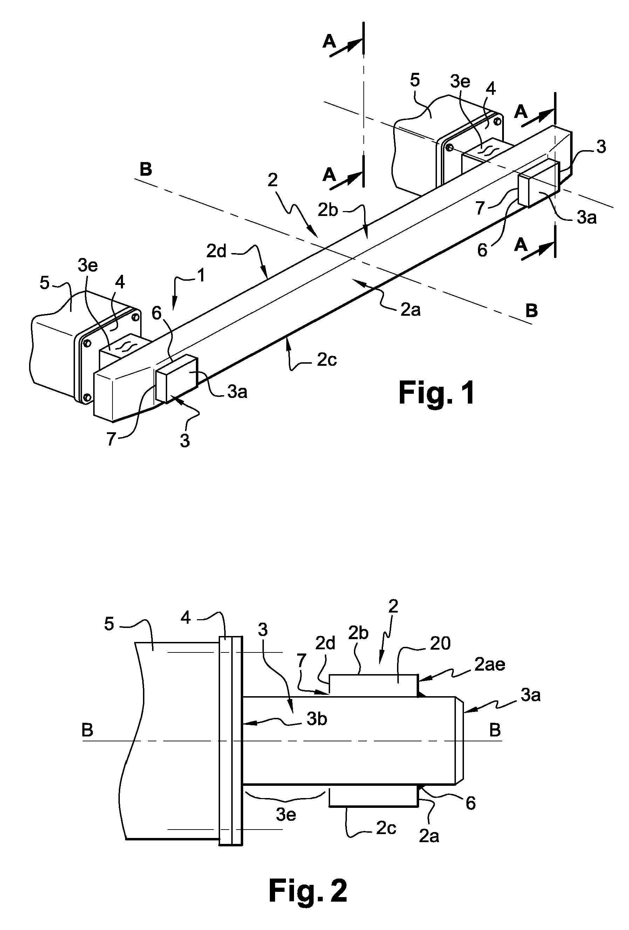

Une telle poutre 1 de pare-chocs, dont une illustration est donnée aux figures 1 à 4, comprend, à titre d'exemple, des éléments de transfert 2 et d'absorption 3 agencés de préférence au niveau des faces « avant » et « arrière » du véhicule, sachant bien entendu que leur agencement sur la structure du véhicule peut aussi se faire uniquement sur l'une de ces deux faces.

Par souci de clarté, seule la poutre 1 située en face « avant » du véhicule sera décrite ci-après. Elle comprend notamment un élément de transfert 2 et deux éléments d'absorption 3. L'élément de transfert se compose d'une traverse qui s'étend selon une direction sensiblement perpendiculaire à l'axe longitudinal B-B du véhicule (Cf. FIG.1). La traverse 2, telle que montrée en FIG.2, est par exemple de section polygonale de sorte à définir une zone interne 20. La traverse 2 se compose de préférence de cloisons avant 2a et arrière 2d orientées sensiblement de manière verticale et reliées entre-elles par des cloisons supérieure 2b et inférieure 2c. La traverse 2 est légèrement incurvée vers l'arrière du véhicule afin de se conformer au plus proche de la peau de pare-chocs qui recouvre notamment ladite poutre. La traverse est de préférence réalisée dans un matériau résistant à la déformation afin de transmettre les efforts à la structure 5 du véhicule.

L'élément d'absorption se compose, par exemple, de deux absorbeurs 3 de forme tubulaire polygonale, qui sont réalisés selon un matériau lui permettant de dissiper par déformation une quantité d'énergie égale à celle engendrée lors d'un choc à « moyenne vitesse ». Les absorbeurs 3 s'étendent selon une direction sensiblement longitudinale au véhicule de sorte que leur déformation s'effectue par écrasement entre tout ou partie de la traverse 2 qu'ils supportent et de la structure sur lequel ils sont fixés. Ainsi les absorbeurs comprennent des faces avant 3a et arrière 3b (Cf. FIGS 2 à 4). Ladite face arrière 3b est de préférence rendue solidaire d'une platine 4 qui est fixée, par exemple, par vissage sur une extrémité avant de la structure 5.

Dans un mode de réalisation préféré de l'invention, la traverse 2 comprend également des ouvertures 7 au travers desquelles se trouvent disposés les absorbeurs 3. En effet, les cloisons avant 2a et arrière 2b de la traverse 2 comprennent des ouvertures 7 destinées à accueillir les absorbeurs 3, de manière à ce que les absorbeurs 3 se trouvent disposés partiellement à l'intérieur de la traverse 2. En fait, une partie de la longueur des absorbeurs se trouve positionnée dans la zone interne 20 de la traverse précédemment décrite.

Les ouvertures 7 ménagées sur la traverse 2 se trouvent positionnées sensiblement au droit des absorbeurs 3. De préférence, les ouvertures 7 sont de forme complémentaire à celle des absorbeurs 3, au jeu de montage près afin d'assurer leur montage. L'assemblage entre les absorbeurs et la traverse définit des lignes de jointure le long desquelles peuvent être posées des lignes continues ou discontinues de soudure 6, lesquelles rendent à la solidarisation permanente des absorbeurs 3 sur la traverse 2. Les lignes de soudure 6 sont ici disposées sur la face extérieur 2ae de la traverse, afin de rendre l'opération de soudure plus aisée.

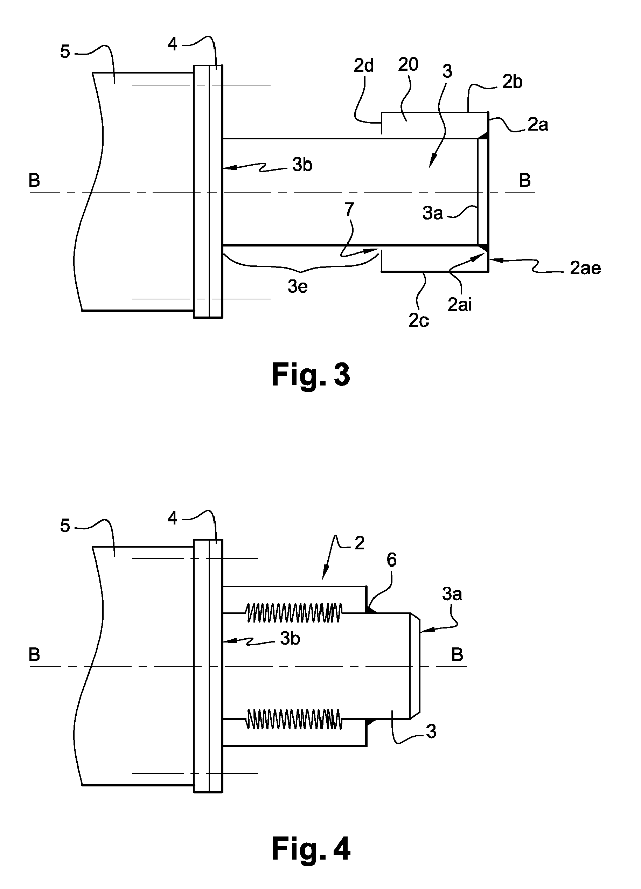

Dans un mode de réalisation secondaire dont une illustration est donnée en FIG.3, seule la cloison arrière 2d de la traverse 2 comprend des ouvertures 7. Dans ce cas, la face avant 3a de chaque absorbeur 3 coopère avec un côté intérieur 2ai de la cloison avant 2a de la traverse. Les lignes de jointure sont ainsi définies par la mise en contact des absorbeurs sur la traverse au niveau du côté intérieur 2ai de la traverse de sorte que les lignes de soudure 6 se trouvent positionnées dans la zone interne 20, plus précisément au niveau du côté intérieur 2ai de la traverse. Comme le mode de réalisation précédent, les lignes de soudure 6 sont soit continues, soit discontinues sur tout ou partie des lignes de jointure.

Ainsi, les efforts émanant d'un choc sont dans un premier temps transmis de la traverse 2 aux absorbeurs 3, provoquant de la sorte une déformation par écrasement des absorbeurs (Cf. FIG.4). Dans ce cas, une partie extérieure 3e de l'absorbeur vient se loger à l'intérieur de la zone interne 20 de la traverse par déplacement au travers de l'ouverture 7 de la cloison arrière 2d de la traverse.

Dans un second temps, les efforts émanant du choc sont transmis de la traverse 2 à la structure 5, la cloison arrière 2d venant en contact contre la platine 4 fixée sur la structure du véhicule.

Etant donné que les absorbeurs sont calibrés pour dissiper une quantité d'énergie dégagée par un choc réparabilité « moyenne vitesse », si l'énergie due au choc est supérieure à celle que les absorbeurs peuvent dissiper par déformation, les absorbeurs 3 se déforment par écrasement jusqu'à atteindre une dimension longitudinale, que l'on nomme parfois de résiduel, et pour laquelle chaque absorbeur n'assure plus son rôle.

Selon l'invention, la dimension longitudinale des cloisons supérieure 2b et inférieure 2c de la traverse est avantageusement choisie de sorte à être sensiblement égale audit résiduel, de manière que la cloison arrière 2d de la traverse vienne en appui contre la structure 5 via la platine 4 lorsque l'énergie provoquée par le choc devient supérieure à celle que peuvent dissiper les absorbeurs 3. Bien entendu, la dimension longitudinale des cloisons 2b et 2c est ajustée au résiduel dans la limite où la résistance de la traverse au choc « grande vitesse » est respectée. Dans une variante de réalisation, la dimension logitudinale des cloisosn 2b et 2c est plus importante que le résiduel de sorte que la traverse participe également à la dissipation de l'énergie d'un choc réparabilité en se déformant en concomitance des absorbeurs.

Ainsi, la poutre de l'invention est remarquable en ce qu'elle répond à la double problématique qui concerne à la fois son encombrement longitudinal et la quantité importante d'énergie à dissiper lors d'un choc.

En effet, le poids de plus en plus élevé des véhicules se traduit par une augmentation de l'énergie à dissiper par les absorbeurs en cas de choc réparabilité « moyenne vitesse », c'est-à-dire par une augmentation de leur longueur. Malgré cela, l'utilisation d'une telle poutre s'affranchit de cette augmentation de longueur des absorbeurs, de sorte à garantir une maîtrise des portes à faux des véhicules. Ainsi, une telle poutre permet de répondre à l'amélioration significative de l'aspect esthétique extérieur des véhicules.

## Revendications

1. Poutre (1) de pare-chocs pour véhicule automobile muni notamment d'une structure (5), ladite poutre (1) comportant au moins un élément de transfert (2) des efforts d'un choc à la structure (5), au moins un élément d'absorption (3) de l'énergie obtenue lors d'un choc, l'élément d'absorption étant interposé entre la structure (5) du véhicule et l'élément de transfert (2), l'élément de transfert (2) s'étendant de manière transversale au véhicule et l'élément d'absorption (3) s'étendant de manière sensiblement perpendiculaire audit élément de transfert (2), **caractérisé en ce que** l'élément d'absorption (3) se trouve partiellement à l'intérieur d'une zone interne (20) de l'élément de transfert (2) de sorte qu'en cas de choc, une partie extérieure (3e) de l'élément d'absorption vienne se loger dans ladite zone interne (20) de l'élément de transfert.

2. Poutre (1) selon la revendication 1, **caractérisée en ce que** l'élément de transfert (2) comprend au moins une ouverture au travers de laquelle s'étend longitudinalement chaque élément d'absorption (3).

3. Poutre selon l'une quelconque des revendications 1 et 2, **caractérisée en ce que** l'élément de transfert (2) comprend au moins une cloison (2a, 2d) s'étendant de manière sensiblement verticale, et **en ce que** l'ouverture (7) est ménagée sur ladite cloison (2d).

4. Poutre selon la revendication 3, **caractérisée en ce que** l'ouverture (7) est ménagée sur des cloisons avant et arrière (2a, 2d) de la traverse (2).

5. Poutre selon la revendication 3, **caractérisée en ce que** l'ouverture (7) est ménagée sur la cloison arrière (2d) de la traverse (2).

6. Poutre selon la revendication 4, **caractérisée en ce que** chaque élément d'absorption (3) s'étend au travers de chaque ouverture ménagée sur la cloison arrière (2d), et **en ce que** chaque élément d'absorption (3) comprend une face avant (3a) disposée contre une face intérieure (2ai) de la cloison avant (2a) de l'élément de transfert (2).

7. Poutre selon la revendication 5, **caractérisée en ce que** chaque élément d'absorption (3) comprend une face avant (3a) disposée à l'aplomb d'une face extérieure (2ae) de la cloison avant (2a) de l'élément de transfert (2).

8. Poutre selon la revendication 5, **caractérisée en ce que** chaque élément d'absorption (3) comprend une cloison avant (3a) faisant saillie hors d'une face extérieure (2ae) de la cloison avant (2a) de l'élément de transfert (2).

9. Poutre selon l'une quelconque des revendications 1 à 8, **caractérisée en ce que** l'élément de transfert (2) est rendu solidaire à l'élément d'absorption par l'intermédiaire d'au moins une ligne de soudure (6) s'étendant le long de tout ou partie d'au moins une ligne de jonction (7) entre l'élément de transfert (2) et l'élément d'absorption (3).

10. Poutre selon la revendication 9, **caractérisée en ce que** ladite ligne de soudure (6) est disposée sur une face extérieure (2ae) de la cloison avant (2a).
